# FASCICULE DE BREVET EUROPEEN

(11) **EP 0 860 243 B1**
(45) Date de publication et mention de la délivrance du brevet: **14.11.2001**
(21) Numéro de dépôt: 98400309.5
(22) Date de dépôt: 11.02.1998
(51) Int. Cl.: B25B 23/00, F16L 3/13

(54) **Embout d'appareil de scellement de tampon pour la fixation de lyre d'électricien**
Endstück für ein Setzgerät zum Verbinden einer Tragevorrichtung
Fitting mountable on a fastening tool for fixing a supporting device

(30) Priorité: 21.02.1997 FR 9702100
(43) Date de publication de la demande: 26.08.1998
(73) Titulaire: SOCIETE DE PROSPECTION ET D'INVENTIONS TECHNIQUES SPIT, 26501 Bourg-Les-Valence Cédex (FR)
(72) Inventeur: Gonnet, Louis, 07300 Saint Jean De Muzols (FR); Jaillet, Guy, 26600 La Roche De Glun (FR)
(74) Mandataire: Bloch, Gérard

(56) Documents cités:
- DE-A- 4 132 504
- FR-A- 2 668 413
- GB-A- 2 099 289
- US-A- 3 313 009

## Description

L'invention concerne un embout conformément au préambule de la revendication 1 (voir FR-A-2 668 413), pour la fixation d'une lyre d'électricien, destinée à fixer sur un support, tel qu'un mur d'habitation, un élément tubulaire, un câble électrique par exemple.

Une lyre comporte une embase d'appui, ménageant un orifice de passage d'un élément de fixation de la lyre au support, et deux branches de réception du câble.

Jusqu'à présent, pour fixer une telle lyre au support, un opérateur devait préalablement percer un trou dans le support, y loger une cheville, et enfin visser la lyre dans celle-ci, la fixation de la lyre nécessitant donc un long temps de pose.

Le Document FR-A-2 668 413 décrit un embout agencé pour être monté sur un appareil de scellement de tampon, cet embout comprenant une patte de fixation à un appareil de scellement, et une mâchoire de réception d'une lyre.

L'invention vise, comme dans le document FR-A-2 668 413, à écourter ce temps de pose de la lyre.

A cet effet, l'invention concerne un embout agencé pour être monté sur un appareil de scellement de tampon pour la fixation de lyre de réception d'élément tubulaire, la lyre comprenant une embase d'appui et deux branches de réception, l'embout étant monobloc et comportant une patte, de fixation à un appareil de scellement, une mâchoire de réception de la lyre et, dans la mâchoire, un noyau de centrage comportant un alésage de passage de tampon ayant un axe et agencé pour être reçu entre les branches de la lyre.

Grâce à l'invention, l'opérateur n'a plus qu'une seule opération de scellement de tampon à effectuer pour poser la lyre après montage de l'embout sur un appareil de scellement.

Avantageusement, le noyau de centrage se retrécit en s'écartant de la patte de fixation pour adaptation à l'écartement des branches de la lyre.

Grâce à cela, l'embout permet de fixer différents types de lyre respectivement destinés à fixer des éléments tubulaires de diamètres différents.

Pour l'adaptation à l'écartement des branches de la lyre, le noyau de centrage peut présenter une géométrie tronconique ou des méplats inclinés sur l'axe de l'alésage de passage de tampon.

De préférence, l'embase de la lyre comportant un orifice de passage de tampon, les axes de l'alésage et de l'orifice de passage de tampon du noyau et de l'embase respectivement, sont confondus lorsque la lyre est reçue sur l'embout, en utilisation.

L'invention sera mieux comprise à l'aide de la description suivante d'une forme de réalisation particulière de l'embout de l'invention, en référence au dessin annexé sur lequel :
- la figure 1 représente une vue en perspective de la forme de réalisation particulière de l'embout de l'invention ;
- la figure 2 représente une vue en coupe de l'embout de la figure 1, suivant la ligne II-II, une lyre étant introduite dans l'embout et
- la figure 3 représente une vue de côté de l'embout de la figure 2, parallèlement au plan de coupe de la figure 2.

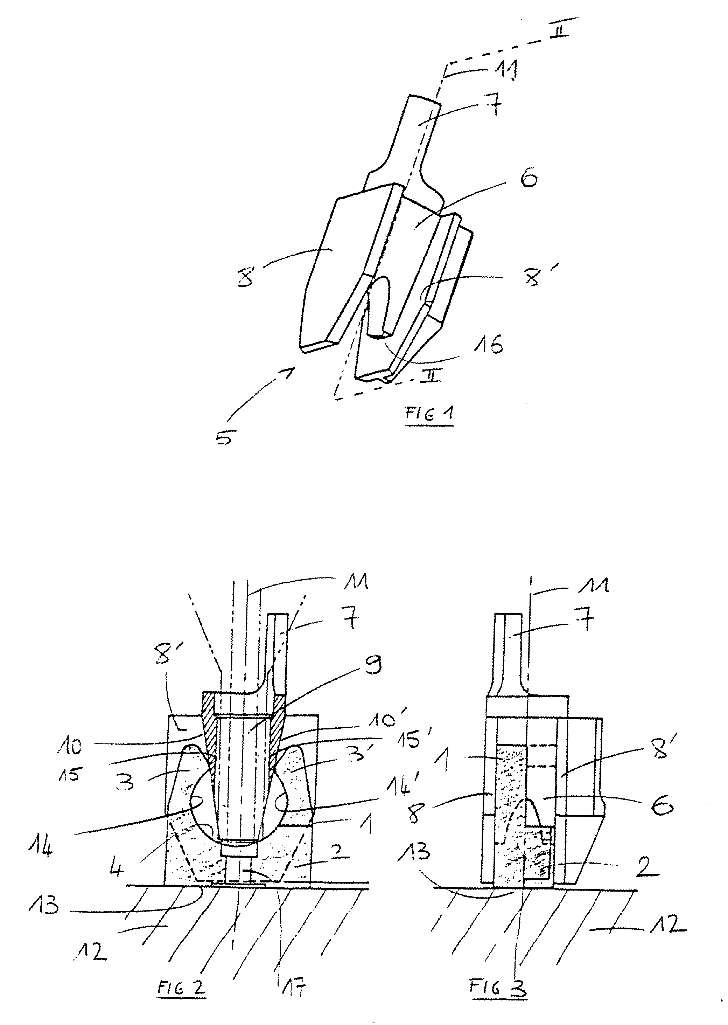

L'embout représenté sur la figure 1 est destiné à être monté sur un appareil de scellement de tampon pour la fixation d'une lyre de réception d'un élément tubulaire, en l'espèce un câble électrique recouvert d'une gaine de protection tubulaire en plastique.

La lyre 1, ici constituée en matière plastique, est destinée à fixer l'élément tubulaire sur un support 12, en l'espèce une paroi murale.

La lyre 1 comprend une embase d'appui 2 présentant une surface 13 d'appui contre le support 12, ici de forme sensiblement rectangulaire, et deux branches 3, 3' de réception de l'élément tubulaire prolongeant respectivement deux bords latéraux opposés de l'embase 2, articulées légèrement élastiquement à eux et s'étendant dans une direction sensiblement perpendiculaire à la surface d'appui 13 du côté opposé à celle-ci.

L'embase d'appui 2 comporte ici un orifice central 17 de passage de tampon.

Les branches 3, 3' présentent une surface intérieure 14, 14' légèrement courbée vers l'intérieur et ménagent, entre leurs extrémités libres recourbées 15, 15', un écartement déterminé de passage légèrement à force de l'élément tubulaire. En outre, l'embase d'appui présente une surface 4, concave, opposée à la surface d'appui 13, de réception de l'élément tubulaire. L'espace délimité par la surface intérieure 14, 14' des branches 3, 3' d'une part, et la surface concave 4 de l'embase d'appui 2 d'autre part, constitue un logement de réception de l'élément tubulaire.

On notera qu'il existe différents types de lyre présentant respectivement différents écartements de passage d'élément tubulaire pour la fixation d'éléments tubulaires de diamètres différents.

L'embout, ici métallique et monobloc, comprend une patte 7, de fixation à l'appareil de scellement de tampon, solidaire d'une mâchoire 5 de réception de la lyre, et d'un noyau de centrage 6 disposé dans la mâchoire 5.

La mâchoire 5 comprend deux flasques 8, 8', de forme sensiblement rectangulaire, parallèles entre eux et entourant le noyau 6.

Le noyau de centrage 6 a ici une forme de cylindre ménageant un alésage axial 9 de passage de tampon et présentant, sur sa surface périphérique extérieure deux méplats 10, 10' d'appui des branches de lyre 3, 3'.

Les méplats 10, 10' d'appui des branches 3, 3', sont symétriques par rapport à un plan perpendiculaire aux flasques 8, 8' et contenant l'axe 11 de l'alésage 9, s'étendent sensiblement sur toute la longueur du noyau et sont inclinés vers l'axe d'alésage, ici en coupant la surface intérieure de l'alésage du noyau 6.

On notera que le noyau de centrage 6 se rétrécit vers l'une de ses extrémités, en l'espèce l'extrémité avant, afin de pouvoir s'adapter à l'écartement des branches de la lyre.

En outre, les bords 16 d'extrémité avant du noyau 6 sont légèrement décalés vers l'arrière par rapport aux bords d'extrémité avant des flasques 8, 8', et forment ainsi des rebords d'appui contre l'embase 2 de la lyre 1.

Le noyau de centrage 6 se prolonge, à son extrémité opposée à l'extrémité rétrécie, par la patte de fixation 7 parallèle à l'axe d'alésage 11.

Pour la fixation de la lyre 1 à un support 12, l'embout est monté par sa patte de fixation 7 sur l'avant de l'appareil de scellement. La surface d'appui 13 de la lyre 1 est plaquée contre le support 12 et la lyre 1 introduite dans la mâchoire 5 de l'embout. L'axe 11 de l'alésage 9 de passage de tampon du noyau 6 et l'axe de l'orifice 17 de l'embase 2 sont alors confondus.

Lors de l'introduction de la lyre 1 dans la mâchoire 5, les deux extrémités libres recourbées 15, 15' des branches 3, 3' de la lyre 1 viennent respectivement en appui contre les deux méplats d'appui 10, 10' du noyau de centrage 6. On force alors l'introduction en poussant l'embout vers l'embase 2 et en écartant ainsi légèrement les branches 3, 3' de la lyre 1 l'une de l'autre, jusqu'à ce que les bords 16 d'extrémité avant du noyau 6 viennent en appui contre l'embase 2.

Dans cette position, l'axe de l'appareil de scellement de tampon étant confondu avec les axes d'alésage 11 et d'orifice 17 de passage de tampon du noyau de centrage 6 et de l'embase 2, respectivement, on entraîne le tampon à l'aide de l'appareil de scellement à travers la lyre dans le matériau 12 afin d'y fixer la lyre.

Dans la forme de réalisation qui vient d'être décrite, le noyau présente des méplats 10, 10' inclinés sur l'axe d'alésage 11. On pourrait aussi envisager que le noyau présente une géométrie tronconique, d'appui des branches 3, 3' de la lyre 1, se rétrécissant en s'éloignant de la patte de fixation.

## Revendications

1. Embout agencé pour être monté sur un appareil de scellement de tampon pour la fixation de lyre (1) de réception d'élément tubulaire, la lyre (1) comprenant une embase d'appui (2) et deux branches de réception (3, 3'), l'embout étant monobloc et comportant une patte (7) de fixation à un appareil de scellement, une mâchoire (5) de réception de la lyre (1) et, dans la mâchoire (5), un noyau de centrage (6) comportant un alésage (9) de passage de tampon ayant an axe (11) et agencé pour être reçu entre les branches (3, 3') de la lyre (1).

2. Embout selon la revendication 1, dans lequel le noyau de centrage (6) se retrécit en s'éloignant de la patte de fixation (7) pour adaptation à l'écartement des branches de la lyre (1).

3. Embout selon la revendication 2, dans lequel le noyau de centrage (6) présente une géométrie tronconique pouvant s'appuyer sur les branches de la lyre (3,3').

4. Embout selon la revendication 2, dans lequel le noyau de centrage (6) présente deux méplats (10, 10'), inclinés vers l'axe (11) de l'alésage (9) de passage de tampon, pouvant s'appuyer sur les branches (3, 3') de la lyre (1).

5. Embout selon l'une des revendications 1 à 4, dans lequel, l'embase (2) de la lyre (1) comportant un orifice (17) de passage de tampon, les axes (11) de l'alésage (9) et de l'orifice (17) de passage de tampon du noyau (6) et de l'embase (2) respectivement, sont confondus lorsque la lyre (1) est reçue sur l'embout (7), en utilisation.

6. Embout selon l'une des revendications 1 à 5, dans lequel la mâchoire (5) comporte deux flasques (8, 8') entourant le noyau (6).

7. Embout selon l'une des revendications 1 à 6, dans lequel le noyau (6) comporte des rebords (16) pouvant s'appuyer contre l'embase (2) de la lyre (1).

## Claims

1. Tip arranged to be mounted on a plug driving apparatus for fixing a lyre-clip (1) for receiving a tubular element, the lyre-clip (1) comprising a support base (2) and two reception arms (3, 3'), the tip being one-piece and including a leg (7) for fixing to a driving apparatus, a jaw (5) for reception of the lyre-clip (1) and, in the jaw (5), a centring core (6) including a bore (9) for passage of the plug having an axis (11) and arranged to be received between the arms (3, 3') of the lyre-clip (1).

2. Tip as described in claim 1, in which the centring core (6) becomes smaller as it becomes distant from the fixing leg (7) to fit the gap between the arms of the lyre-clip (1).

3. Tip as described in claim 2, in which the centring core (6) has a geometry in the form of a truncated cone able to bear against the arms of the lyre-clip (3, 3').

4. Tip as described in claim 2, in which the centring core (6) has two flats (10, 10') sloped from the axis (11) of the bore (9) for passage of the plug, able to bear against the arms (3, 3') of the lyre-clip (1).

5. Tip as described in one of claims 1 to 4, in which the base (2) of the lyre-clip (1) including an orifice (17) for passage of the plug, the axes (11) of the bore (9) and of the orifice (17) for passage of the plug of the core (6) and of the base (2) respectively, coincide when the lyre-clip (1) is received on the tip (7), in use.

6. Tip as described in one of claims 1 to 5, in which the jaw (5) includes two side places (8, 8') enclosing the core (6).

7. Tip as described in one of claims 1 co 6, in which the core (6) includes ledges (16) which can bear against the base (2) of the lyre-clip (1).

## Patentansprüche

1. Zur Montage auf einem Setzgerät angeordnetes Endstück, welches dazu bestimmt ist, eine rohrförmige Elemente aufnehmende Tragevorrichtung (1) zu befestigen, wobei die Tragevorrichtung (1) einen Stützansatz (2) und zwei Aufnahmeschenkel (3, 3') aufweist, wobei das Endstück einstückig ist und eine Lasche (7) zur Befestigung auf einem Setzgerät , Aufnahmebacken (5) für die Tragevorrichtung (1) und in den Backen (5) einen eine Stopfendurchgangsbohrung (9), eine Achse (11) aufweisenden und zur Aufnahme zwischen den Schenkeln (3,3') der Tragevorrichtung (1) angeordneten Zentrierkern (6) aufweist.

2. Endstück nach Anspruch 1, bei dem sich der Zentrierkern (6) , um sich an die Spreizung der Schenkel der Tragevorrichtung (1) anzupassen, bei gleichzeitiger Entfernung von der Befestigungslasche (7) verengt .

3. Endstück nach Anspruch 2, bei dem der Zentrierkern (6) eine kegelstumpfartige Geometrie aufweist, welche sich auf die Schenkel (3,3') der Tragevorrichtung aufstützen kann.

4. Endstück nach Anspruch 2, bei dem der Zentrierkern (6) zwei Abschrägungen (10,10') aufweist, welche zur Achse (11) der Stopfendurchgangsbohrung (10) geneigt sind und sich auf die Schenkel (3,3') der Tragevorrichtung (1) aufstützen können.

5. Endstück nach einer der Ansprüche 1 bis 4, bei dem jeweils der Ansatz (2) der Tragevorrichtung (1) , welcher eine Stopfendurchgangsbohrung (17) aufweist, die Achsen (11) der Bohrung (9) und der Stopfendurchgangsöffnung des Kerns (6) und des Ansatzes (24) verschmelzen, sobald die Tragevorrichtung (1) auf dem in Benutzung befindlichen Endstück (7) aufgenommen werden.

6. Endstück nach einem der Ansprüche 1 bis 5, bei dem die Backen (5) zwei den Kern (6) umgebende Flansche (8,8') aufweisen.

7. Endstück nach einem der Ansprüche 1 bis 6, bei dem der Kern (6) Stoßkanten (16) aufweist, die sich gegen den Ansatz (2) der Tragevorrichtung (1) aufstützen.
